# EUROPEAN PATENT SPECIFICATION

(11) **EP 2 469 305 B1**
(45) Date of publication and mention of the grant of the patent: **23.01.2019**
(21) Application number: 11195757.7
(22) Date of filing: 27.12.2011
(51) Int. Cl.: G01T 1/29, G01T 1/24

(54) **X-ray detector**
Röntgendetektor
Détecteur à rayons X

(30) Priority: 27.12.2010 JP 2010289688
(43) Date of publication of application: 27.06.2012
(73) Proprietor: Rigaku Corporation, Akishima-shi Tokyo 196-8666 (JP)
(72) Inventor: Tsukiyama, Akira, Tokyo, 196-8666 (JP); Sakumura, Takuto, Tokyo, 196-8666 (JP); Tsuji, Yuji, Tokyo, 196-8666 (JP)
(74) Representative: Hoffmann Eitle

(56) References cited:
- EP-A2- 2 326 080
- WO-A1-98/07048
- WO-A1-2006/072848
- US-A1- 2010 020 173

## Description

### BACKGROUND OF THE INVENTION

### Field of the Invention

The present invention relates to an X-ray detector detecting X-ray image data for each detection module.

### Description of the Related Art

In attempting to configure a single-photon counting-type X-ray detector, in which a detection section is integrated by a photodiode, there is a limit on the size of the detection section. This is because the detection surface having a large area is difficult to be configured due to a limit on the size of a semiconductor wafer and defects present at a constant rate in a semiconductor chip. As a result, the detection section in the unit of a module cannot help but being configured with a realizable maximum size. When a further larger detection surface is needed, usually, a plurality of detector modules are electrically and mechanically connected to each other and the respective detection surfaces are joined together. For example, each detector module is arranged so as to form the detection surface on the same plane, onto which a transmission image or an X-ray diffraction pattern is projected.

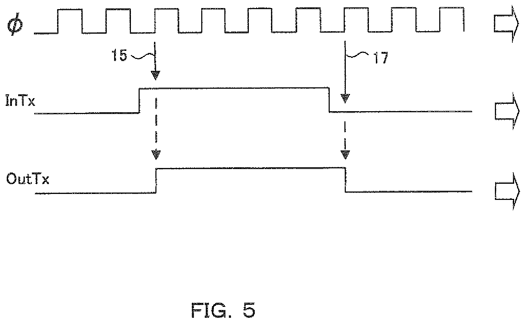

In a detector described in WO2007/025605 (Patent Document 1), a plurality of imaging modules are fixed and arranged on a frame, in which rails placed side by side at equal intervals for installation are arranged. However, Patent Document 1 does not disclose a method of extracting data from the respective imaging modules. A detector described in US Patent Application Publication No. 2003/0164888 (Patent Document 2) arranges a plurality of imaging devices like a tile wall to thereby form a large detection surface (FIG. 5A). Data from each imaging device is transmitted via a master multiplexer. In a detector described in US Patent No. 5629524 (Patent Document 3), a detection surfaces in the same plane is formed by a plurality of detectors. WO98/07048 discloses an X-ray detector detecting X-ray image data comprising: a plurality of detection modules, each of which is connected in series, and has a function of transferring the read image data one after another, wherein each of the plurality of detection modules receives the transferred X-ray image data, and transfers the same together with the X-ray image data detected by itself.

For the arrangement of detector modules, first, a fixation mechanism of each detector module suited for a desired arrangement is needed. Then, a method of reading data from each detector module needs to be determined. As the method of reading data, there is known a method of once sending a signal from a detector module to a bus line and then sequentially sending the same via a common bus line.

For example, there is a known method, in which a plurality of detector modules are arranged vertically and horizontally to form one detection surface, and in which a signal output of each detector module is bus-connected and extracted. In this method, forming a bus-connected transmission line with an integrated printed-wiring board is indispensable in order to maintain a signal extraction rate, and thus a dedicated bus-connected wiring board depending on how to arrange detection modules has to be designed and fabricated each time.

For example, "The PILATUS 1M detector", J. Synchrotron Rad. (2006) .13, 120-130, Ch. Broennimann et al., (Non patent literature 1) discloses a method of configuring a plurality of detection modules (P. 126). The respective three detector modules described in this document are connected to each Bank Control Board (BCB). Then, the BCBs are connected to each other with a parallel cable, and a signal line constitutes a bus line by 3.3 V TTL.

There is a requirement in which the detection surface of X-rays is desired to be formed depending on each condition. For example, in an X-ray CT method or a typical X-ray diffraction method, the detection surface sometimes has to be arranged on the equidistant circumference relative to a sample. In the conventional diffraction method, a detector arranged on an arm of a goniometer driven by a motor is moved, and then the diffraction patterns appearing at various angles from a sample position are continuously captured. However, if the detection surface can be continuously formed on the circumference or on the sphere, information can be obtained at one time in a short time. This allows for the increase in speed of sample analysis or the analysis of samples that change with the passage of time. It is more preferable if the arrangement of detector modules can be changed depending on a measurement condition.

However, the detector described in the above-described Patent Documents is limited, in the arrangement of a plurality of detector modules, to the detector forming a predetermined planar detection surface, and thus it is difficult to create a detection surface depending on the condition. In addition, it cannot be said that a data read method that easily realizes a continuous arrangement of the detection surface of a suitable imaging device is employed in the above-described Patent Documents.

Moreover, in the method of configuring a plurality of detection modules described in Non-Patent Document 1, the limit of the frequency of a transfer operation clock of a single-ended bus line is typically on the order of 100 MHz (see "LVDS Owner's Manual", National Semiconductor Corporation, p. 5-3). Since there is also a limit on the drive capability of a bus driver device, the bus-line length cannot be increased to more than a certain length. Since the connection number of detector module is fixed in the board (BCB) for connecting the detector modules, the individual detector module cannot be freely arranged, as it is. From the above, with the method described in Non-Patent Document 1, it is difficult to process data depending on the individually-requested arrangement of the detector modules. Moreover, since there is a limit on the transfer clock frequency, it is difficult to process multiple pixel data, when multiple modules are connected.

Meanwhile, in consideration of a signal transmission rate, it is also considered preferable to use a high-speed signal transmission method, for example, such as LVDS, in a one-to-one connection mode (Reference Document, "LVDS Owner's Manual", National Semiconductor Corporation, p. 5-3). However, if a transmission signal line from respective detector modules is connected to a control device (e.g., computer) on a one-to-one basis, the same number of control devices as the number of the detector modules is needed.

Also on the processing side, the operational constraint cannot be avoided, including the fact that the data once distributed and transferred have to be processed anew as one unit of data. In addition, in order to perform the synchronization operation among the respective detector modules or to reconfigure the whole captured images, it is needless to say that time and efforts are separately needed.

Furthermore, in the single-ended wiring, there are limits on the size and transmission rate (clock rate) of a bus-wiring path that can be configured with respect to the signal propagation and the drive capability. For this reason, the size of the detection surface that can be configured with a plurality of modules and the data extraction rate are restricted. In this manner, there is a constraint on how to arrange detection modules, depending on the method of transferring data from each detector module to a device capable of processing and controlling image data.

### SUMMARY OF THE INVENTION

The present invention has been made in view of the above circumstances, and an object of the present invention is to provide an X-ray detector capable of configuring a detection surface with a suitable shape, arrangement, and area depending on the intended use, and capable of connecting a large number of detector modules while maintaining a wide signal read operation bandwidth.
(1) In order to achieve the above-described objective, an X-ray detector according to the present invention is an X-ray detector as defined in claim 1. A typical example of the serially connected form is the so-called daisy chain connection.
   Therefore, in the X-ray detector of the present invention, each detection module resynchronizes with the internal clock and transfers X-ray image data. This enables arranging the detection module at an arbitrary position without a change in a method of transferring data for each measurement or without a load on a control device side. As a result, the circumferential arrangement, spherical arrangement, linear arrangement, or the like of the detection modules can be designed depending on an application method, and thus data can be efficiently collected in a short time.
   For example, the present invention is effective in the field of image acquisition using X-rays, particularly in the field, in which an optical arrangement for simultaneously detecting and processing the X-rays spreading at various angles from an object to be observed is needed. In X-ray diffraction, it is necessary to identify the intensity information on X-rays observed on a circumference centering on a sample together with its appearance position, and thus the present invention is effective. Moreover, in X-ray CT, it is necessary to irradiate the entire circumference of a sample with X-rays and acquire an image, and thus the present invention is effective.
(2) In addition, in the X-ray detector according to the present invention, each of the plurality of detection modules transfers a transfer clock used in synchronization of the transfer and a transfer control signal controlling the transfer together with the X-ray image data, and resynchronizes the transfer clock by retiming the transfer clock to the internal clock. In this manner, the detection module performs retiming on the transfer clock with the internal clock to thereby be able to resynchronize and transfer the X-ray image data.
(3) Furthermore, in the X-ray detector according to the present invention, the detection module at an end on an output side of transfer of the X-ray image data transfers the X-ray image data to a control device controlling the plurality of detection modules. Therefore, the control device can receive the synchronized X-ray image data, and efficiently process the data once distributed and transferred, as a new unit of data.
(4) Moreover, the X-ray detector according to the present invention includes: as a line connecting each of the plurality of detection modules, a forward control line transmitting the transfer control signal in the forward direction relative to the transfer of the X-ray image data; and a backward control line transmitting the transfer control signal in the backward direction relative to the transfer of the X-ray image data. This enables signal transmission from a direction different from the flow of image data. For example, the operation of X-ray image data transfer can be controlled by a signal from the control device.
(5) Furthermore, the X-ray detector according to the present invention includes a serial communication line for connecting each of the plurality of detection modules and for transmitting the transfer control signal in both directions on an output side and an input side of the X-ray image data. This enables not only the exchange of a mere signal but also the transmission of a command made up of a text message. As a result, a complicated operation control on the detection module is possible.
(6) In addition, in the X-ray detector according to the present invention, each of the plurality of detection modules includes an input-side line buffer temporarily storing an input signal and an output-side line buffer temporarily storing an output signal. This enables solving signal attenuation due to a distance, possibly caused by connecting the detection modules or solving signal distortion possibly caused during input/output of a signal, and thus the signal quality when a signal reaches the control device can be guaranteed.
(7) Moreover, in the X-ray detector according to the present invention, each of the plurality of detection modules performs the data transfer by using a differential signal. Therefore, if all the signal lines constituting a transfer cable are set as differential signal lines, the frequency of a transfer clock for reading image data can be increased. In particular, an increase in the amount of image data possibly caused by connecting a large number of detection modules can be dealt with by reducing the transfer time.
(8) Furthermore, in the X-ray detector according to the present invention, each of the plurality of detection modules detects X-rays through the use of a single-photon counting method. This enables configuring an X-ray detector effective in the field of analysis by X-ray diffraction. Then, if detection surface arrangement specific to an analytical method by X-ray diffraction is configured, high-speed analysis can be realized with a large amount of data.
(9) In addition, in the X-ray detector according to the present invention, the detection module further includes a position verification port recognizing that the detection module is positioned at an end on an input side of transfer of the X-ray image data. This enables causing the detection module positioned at an end of connection to perform a specific operation, and thus a high-speed transfer start operation is possible.
(10) Moreover, in the X-ray detector according to the present invention, the detection module is arranged so as to form a detection surface of X-rays on the circumference with respect to a sample. Therefore, in using X-ray CT or X-ray diffraction, the detection surface can be arranged on the circumference equidistant from a sample.

According to the X-ray detector of the present invention, the detection module can be arranged at an arbitrary position without a change in a method of transferring data for each measurement or without a load on a control device side. As a result, the detection modules can be designed in the circumferential arrangement, spherical arrangement, linear arrangement, or the like according to an application method, and thus data can be efficiently collected in a short time.

### BRIEF DESCRIPTION OF THE DRAWINGS

FIG. 1 is a schematic diagram showing the configuration of an X-ray detector system according to the present invention.
FIG. 2 is a block diagram showing the configuration of a detection module.
FIG. 3 is a block diagram showing an example of the detailed configuration of the detection module.
FIG. 4 is a schematic diagram showing the operation of a retiming circuit.
FIG. 5 is a diagram showing an operational relationship between signals by the retiming circuit.
FIG. 6 is a view showing an example of the transfer of X-ray image data.
FIG. 7 is a timing chart of signals showing a transfer operation of image data.
FIG. 8 is a view showing an example of the arrangement of detection modules.
FIG. 9 is a view showing an example of the arrangement of detection modules.
FIG. 10 is a view showing an example of the arrangement of detection modules.

### DETAILED DESCRIPTION OF THE INVENTION

Next, embodiments of the present invention will be described with reference to the accompanying drawings. For ease of understanding of the description, in each drawing, the same reference numeral is attached to the same component, and the repeated explanation thereof is omitted.

### (X-ray detector system)

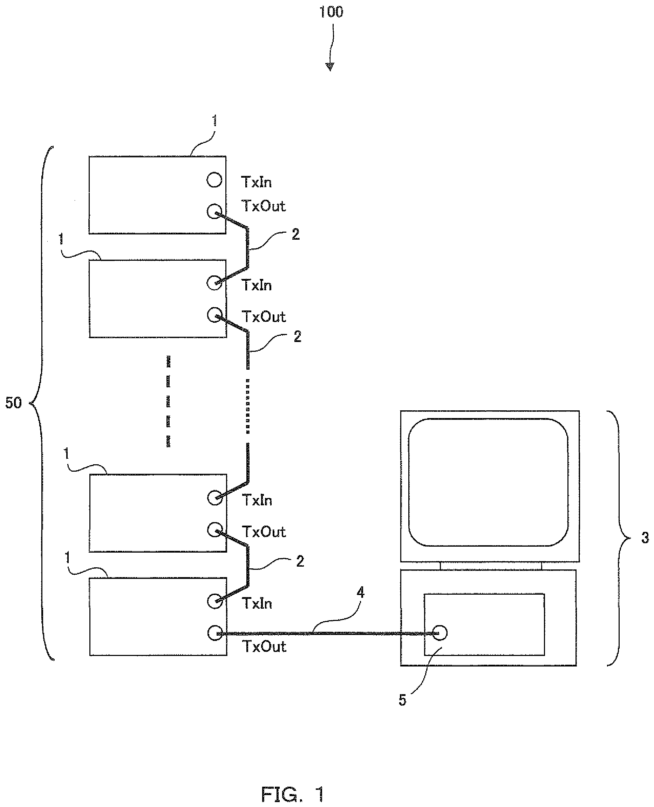

FIG. 1 is a schematic diagram showing the configuration of an X-ray detector system 100. The X-ray detector system 100 is configured with an X-ray detector 50 and a data input port 5 of a control device 3. The X-ray detector 50 is configured with a plurality of detection modules 1 sequentially connected in series. The X-ray detector 50 detects X-ray image data for each detection module. The X-ray detector 50 is connected to the control device 3 with a telecommunication cable 4 via the detection module 1 at an end on an output side of data transfer, and sends the read X-ray image data to the control device 3. The control device 3 controls the X-ray detector 50, and also stores and processes the received X-ray image data. All the detection modules 1 have the above-described structure.

An output port TxOut of the detection module 1, which has the same structure to another, is interconnected in series to an input port TxIn of other adjacent detection module via a transfer cable 2 (the so-called daisy chain connection). Since the arrangement of each of the detection module 1 is not limited to a specific hardware, for example, such as a bus circuit board, a free arrangement to an arbitrary position is possible.

### (Detection module)

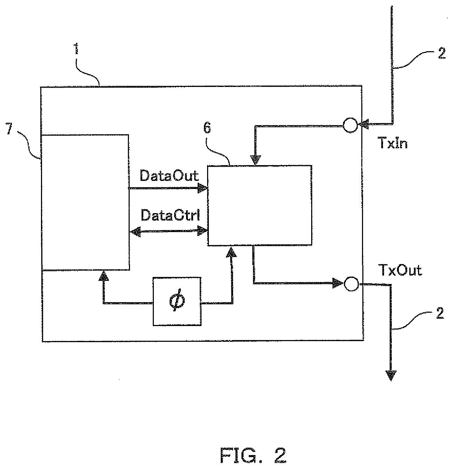

FIG. 2 is a block diagram showing the configuration of the detection module 1. The detection module 1 includes a detection section 7, a transfer section 6, the input port TxIn, and the output port TxOut. The detection section 7 detects X-rays and holds the X-ray image as X-ray image data. The detection section 7 detects X-rays through the use of a single-photon counting method, and converts the X-ray image into X-ray image data.

An image data line DataOut and an image control line DataCtrl are connected to the transfer section 6. The image data is transmitted from the detection section 7 on the image data line DataOut. A control signal is transmitted to the detection section 7 on the image control line DataCtrl. Moreover, the input port TxIn and the output port TxOut are also connected to the transfer section 6. The input port TxIn is provided for once receiving the data from the outside of the detection module 1. The output port TxOut is provided for sending data to the outside. The transfer section 6 synchronously reads X-ray image data based on an internal clock *φ* from the detection section 7, and transfers the X-ray image data read by itself and the received data, to the outside. The input port TxIn is a port to which the transferred data is input. The output port TxOut is a port from which the data to be transferred is output.

Moreover, both the detection section 7 and the transfer section 6 share the internal clock *φ* inside the detection module 1 and thus synchronously operate. In this manner, each of the detection module 1 performs the control and operation of the inside thereof using the internal clock *φ*.

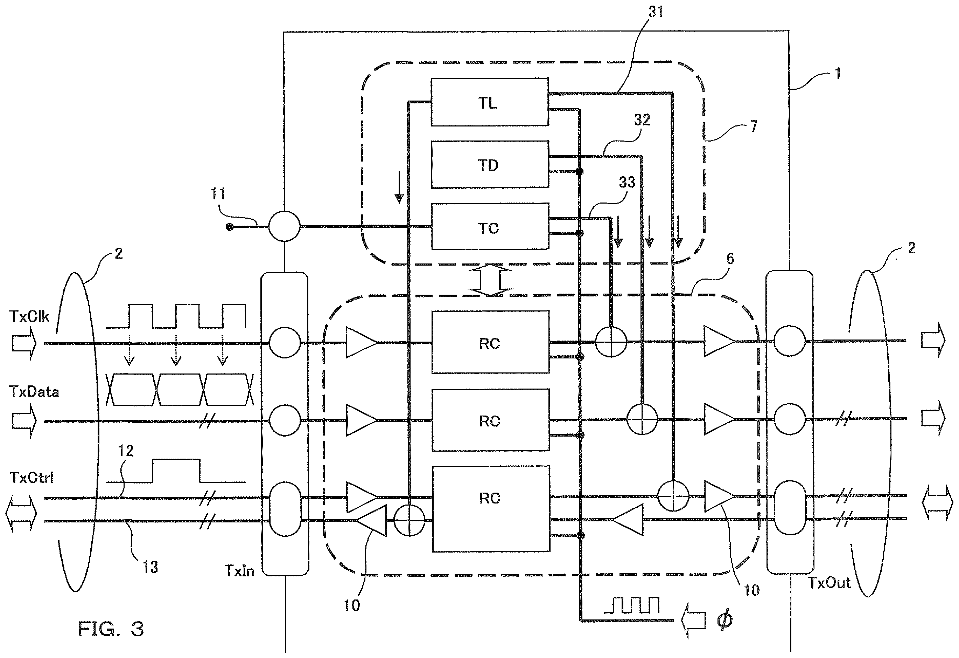

FIG. 3 is a block diagram showing an example of the detailed configuration of the detection module. The detection section 7 includes a transfer control circuit TL, a transfer data circuit TD, and a transfer clock circuit TC. The transfer control circuit TL, on completing the output of its own image data, transmits a signal (the next output start signal) prompting start of transfer via a transfer control line 31, to the destination detection module 1. The transfer data circuit TD, when the signal prompting start of transfer has been recognized, causes the image signal to synchronize with a transfer clock via a transfer data line 32 and outputs the image signal to the transfer cable 2. The transfer clock circuit TC sends a clock signal via a transfer clock line 33 depending on the input of the transfer clock.

The transfer section 6 includes the respective retiming circuits RC for a transfer clock, for transfer image data, and for a transfer control signal. The detection module 1 once resynchronizes the signal and data entering from the input port TxIn by using its own internal clock *φ* in these retiming circuits RC, and outputs the same to the output port TxOut.

Therefore, while synchronizing the control signal for a start time with the control signal for a termination time of X-ray exposure among the detection modules 1, when the transfer of image data from one detection module 1 is completed, an operation of prompting the adjacent next detection module 1 to transfer image data is enabled. Then, even in the X-ray detector 50, in which the detection modules 1 each having the internal clock *φ* with a different timing are connected, the timing between the transfer clock line 33 for synchronous reading of image data signal and the transfer data line 32 for sending image data is always guaranteed.

As shown in FIG. 3, the respective detection modules 1 are connected alternately by the transfer cable 2. The transfer cable 2 is configured with three types of signal lines: the transfer clock line 33, the transfer data line 32, and the transfer control line 31. The transfer clock line 33 transmits the transfer clock signal for synchronous reading of an image data signal. The transfer data line 32 is configured with one or more signal lines and transmits the image data. The transfer control line 31 transmits a control signal controlling the data transmission of each of the detection module 1.

All the signals input from the input port TxIn through the transfer cable 2 enter the transfer section 6 for the time being. The retiming circuit RC in the transfer section 6, as described above, performs retiming by using the internal clock *φ* of the detection module 1, and outputs the data from the output port. Moreover, each of the detection modules 1 also outputs a signal indicative of the break of data for each detection module 1. For this reason, the transmission line of the standard, such as CameraLink may be used.

In this manner, the interconnected detection modules 1 each have a function of transferring the image data individually detected by itself, and also has a function of relaying and transferring the received image data. In this manner, particularly, without special adjustment such as the reconfiguration of hardware for expansion, it is possible to freely arrange an arbitrary number of detection modules 1 at an arbitrary position and to configure the X-ray detector 50.

The detection module 1 preferably includes a forward control line 12 on which data is sent in the same direction as the transfer data line 32 and a backward control line 13 on which data is sent in the opposite direction of the transfer data line 32, in the transfer control line 31. Therefore, such a control corresponding to both directions, that an instruction to start image transfer is issued directly from the control device 3, can be performed depending on the configuration of the X-ray detector 50.

Moreover, a serial communication line for carrying out communication in both directions is preferably included in the forward control line 12 and the backward control line 13 of the transfer control line 31. Therefore, instruction and control with a character string from the control device 3 can be performed by the detection module 1.

Line buffers 10 for input and for output are preferably provided directly after the input port TxIn of the transfer section 6 and directly before the output port TxOut, respectively. Therefore, the signal attenuation or distortion caused by transfer between the detection modules 1 can be removed and the signal quality when a signal reaches the control device 3 can be guaranteed. It should be noted that the positional relationship between "before" and "after" is determined by the order of the input and output of a signal, and the input side of a signal is referred to as "before" and the output side of a signal is referred to as "after".

Moreover, each signal line in the transfer cable 2 is preferably configured with a differential signal line. Therefore, the frequency of a transfer clock for reading image data can be increased. In particular, the increase in the amount of image data which may be caused by connection of a large number of detection module can be dealt with by reducing the transfer time.

The detection module 1 preferably includes a position verification port 11 recognizing that the detection module 1 itself is positioned at an end on an input side of transfer of X-ray image data. This enables causing the detection module positioned at an end of connection to perform a specific operation, and thus a high-speed transfer start operation is possible.

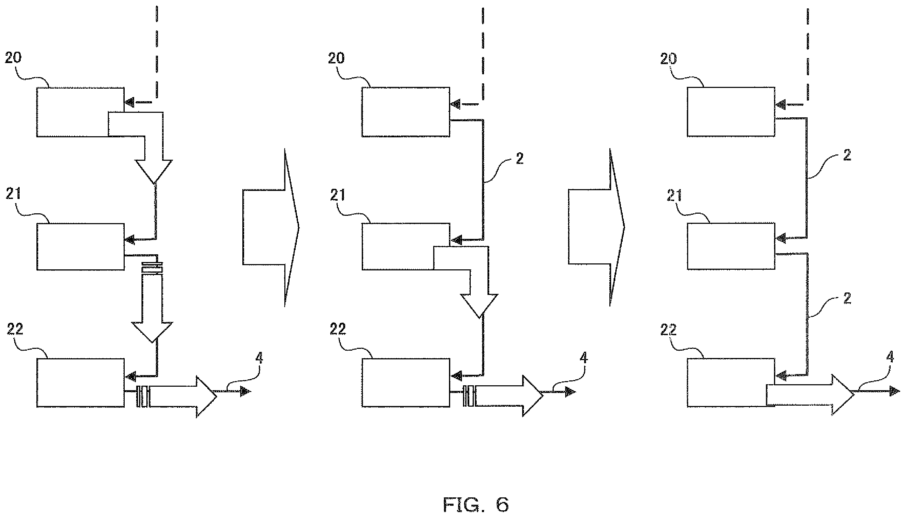

For example, in a later-described configuration shown in FIG. 6, only the first module 20 can send the transfer clock TxClk. Moreover, data transfer can also be started first after the exposure to X-rays is completed. In this manner, the position verification port 11 enables starting data transfer earlier as compared with the case of prompting a specific detection module to start transfer by means of communication.

Each of the detection module 1 outputs, from a signal line passing through the output port, a signal (the next output start signal) notifying the destination detection module 1 of the completion of output of its own image data. If the next output start signal is sent in this manner, the whole relevant row of detection modules starts to transfer, sequentially one after another. Accordingly, each of the detection module 1 does not send a signal to the upstream side of the input/output.

Each of the detection module 1 includes an input-side line buffer on the input port side and an output-side line buffer on the output port side. The input-side line buffer temporarily stores an input signal. The output side line buffer temporarily stores an output signal. Each of the input side line buffer and the output side line buffer has a drive capability suited for the characteristics of the signal line of a cable between the detection modules used.

### (Retiming)

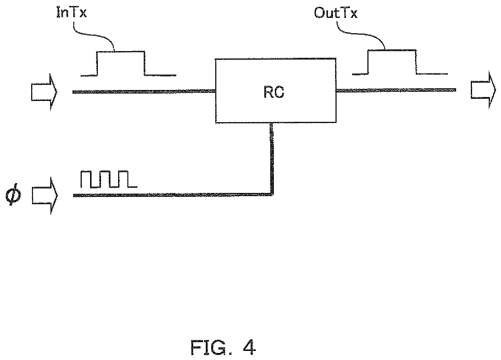

FIG. 4 is a schematic diagram showing the operation of the retiming circuit RC, and FIG. 5 is a diagram showing the operational relationship between signals by the retiming circuit RC. FIG. 4 shows the simplified each individual retiming circuit RC. In the operation state shown in FIG. 4, the input signal InTx, the output signal OutTx, and the internal clock *φ* are input to the retiming circuit RC.

The operational relationship between these signals is shown in FIG. 5. If the input signal InTx that does not synchronize with the internal clock *φ* at all is recognized as "High" at a rising timing 15 of the first internal clock *φ*, the retiming circuit RC outputs "High" as the output signal OutTx. Moreover, if the fact that the input signal InTx, which once became "High", has become "Low" is recognized at a rising timing 17 of the internal clock *φ* possibly recognizing this fact fist, the retiming circuit RC outputs "Low" from the output signal OutTx. In this manner, the input signal can be converted to a signal synchronized with the timing of its own internal clock *φ*.

### (Operation example of data transfer)

FIG. 6 is a view showing an example of the transfer of X-ray image data. An example on the left of FIG. 6 shows an embodiment, in which the image data of the first module 20 is sent first via a second module 21 and a third module 22 and finally to the control device 3 through the telecommunication cable 4. It should be noted that, although all of the first module 20, the second module 21, and the third module 22 are constituted as the detection module 1, these modules are discriminated in the transfer order, for convenience.

After the completion of sending all its own image data, the first module 20 sends a signal (not shown) prompting the second module 21 to start transfer through the transfer control line 31, for example, and thus the second module 21 can start to send its own image data. This operation is shown in the middle of FIG. 6.

Similarly, when the second module 21 completes sending all the image data detected by itself, the second module 21 notifies the third module 22 of the completion of transmission, and thus the third module 22 can start to send the image data detected by itself. This operation is shown on the right of FIG. 6. The above-described series of operations allows for image acquisition with an arbitrary number of detection modules 1 being connected, without separately preparing hardware for data transfer.

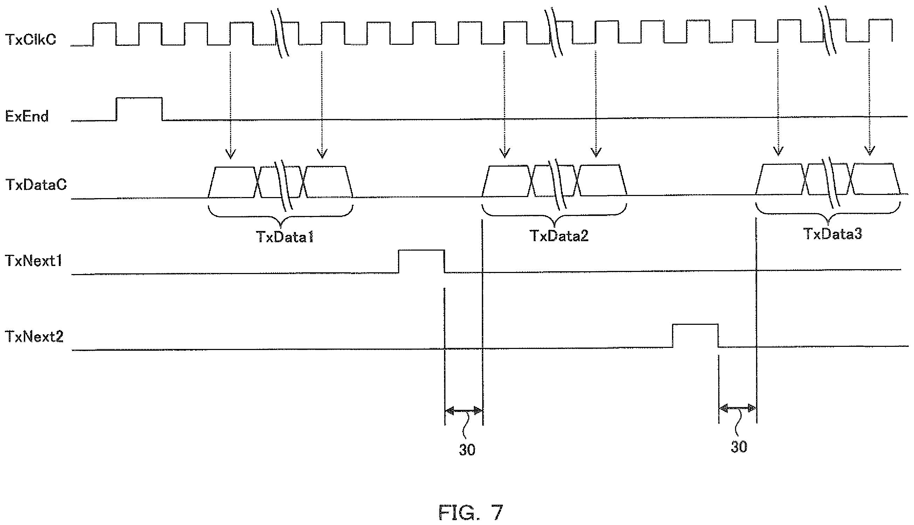

FIG. 7 is a signal timing chart showing the transfer operation of image data shown in FIG. 6. In the example shown in FIG. 7, the transfer clock TxClkC is transmitted through the telecommunication cable 4. Data TxDataC is sent on one signal line among transfer data lines 32 in the telecommunication cable 4.

A signal ExEnd is a signal indicative of the completion of exposure to X-rays, i.e., a signal (not shown) prompting start of transfer of image data, in the first module 20. This signal may be an internal signal of the first module 20 or may be an external signal. A signal TxNext1 is a signal with which the first module 20 prompts the second module 21 to start transfer through the transfer control line 31. Similarly, a signal TxNext2 is a signal with which the second module 21 prompts the third module 22 to start transfer through the transfer control line 31.

The transfer clock TxClkC is used in order to read a signal on the transfer data line 32 in the control device 3. For example, the timing is preferably maintained such that the rising of the transfer clock TxClkC is positioned in the center of an actual data portion of the transfer data line 32 by the transfer clock TxClkC.

However, in each individual detection module 1, it is possible to generate the internal clock *φ* with the same operation frequency, but it is difficult to align the operation timing of the internal clock *φ* of each of the detection module 1. Therefore, by using the same configuration as it is, the timings of the image data signals the respective detection modules send are not aligned with each other.

In contrast, in the configuration shown in FIG. 1, if the respective modules independently send the transfer clock TxClk, then when data transmission is switched between the detection modules, a timing shift caused by the timing shift of the internal clock *φ* between the respective transfer clocks TxClk is produced, and thus, in the transfer clock TxClkC, an irregular timing is generated in the clock signal.

For this reason, the detection module 1 that sends the transfer clock TxClk is preferably one of the detection modules 1 constituting the X-ray detector 50. In the example shown in FIG. 6, the first module 20 sends the transfer clock TxClk, and inside the first module 20, the transfer clock circuit TC shown in FIG. 3 sends the clock signal by using the transfer clock line 33. In the other modules, the transfer clock line 33 is disabled.

In the embodiment shown in FIG. 7, when the signal ExEnd has been recognized by the first module 20, the first module 20 synchronizes an image signal with the transfer clock TxClk generated by itself, and outputs the same from the transfer data circuit TD to the data TxData in the transfer cable 2 via the transfer data line 32. This state is shown on the left of FIG. 6.

In the example shown in FIG. 7, on completing data transfer of the image data TxData1 of the first module 20, the first module 20 sends the signal TxNext1 to the second module 21 via the transfer control line 31, in the transfer control circuit TL. The second module 21 having received the signal TxNext1 starts the transmission of the image data TxData2 detected by itself.

The time 30 before starting to send image data is determined based on a predetermined number of clocks of the transfer clock TxClk. Therefore, timing always synchronized with the transfer clock TxClkC and the image data spaced apart by the clocks at a constant interval can be sent in the data TxDataC in the transfer cable 2. In this manner, also between the second module 21 and the third module 22, the operation is similarly performed, and the third module 22 having received the signal TxNext2 sends image data TxData3 detected by itself.

By following the above-described procedure, even when a large number of detection modules are connected, the read clock and image data whose read timing in the control device 3 is guaranteed can be transmitted.

### (Example of arrangement of the detection module)

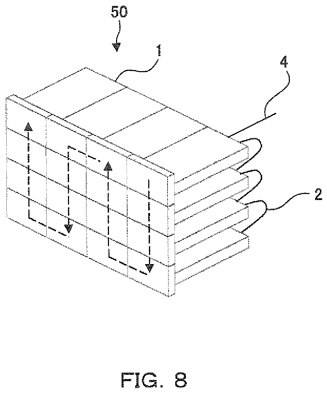

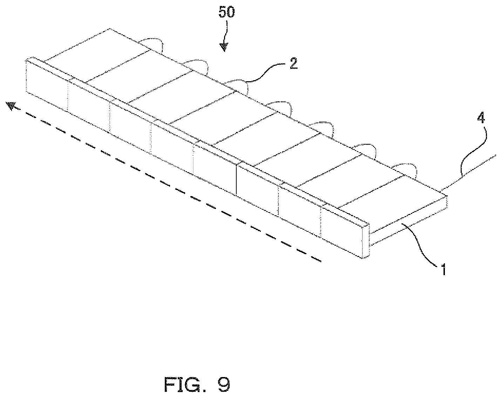

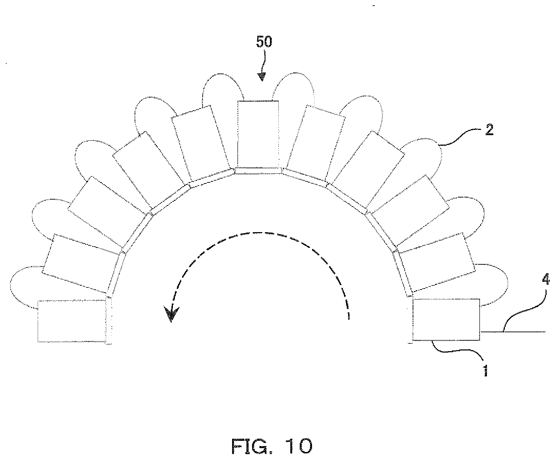

Connecting the detection modules 1 to a series of transfer cables 2 in this manner enables responding to the arrangement of various forms of detection modules. FIGS. 8 to 10 are views showing examples of the arrangement of the detection modules. In FIGS. 8 to 10, the order in which connection is performed seen from the control device 3 is indicated by a dotted line arrow. FIG. 8 shows an N-by-M arrangement on the same plane, FIG. 9 shows a horizontally one-line arrangement on the same plane, and FIG. 10 shows a circumferentially arranged detection surface. It should be noted that other arrangements can be employed as long as the length of the transfer cable 2 connecting the modules and the degree of flexion are allowed.

## Claims

1. An X-ray detector (50), comprising:
a plurality of detection modules (1), connected in series, each of the plurality of detection modules having
an input port (TxIn) configured to receive data from the upstream detection module,
an output port (TxOut) configured to send data to the downstream detection module,
a detection section (7) configured to detect X-rays and convert them into X-ray image data, and
a transfer section (6) configured to transfer said data received via said input port (TxIn) and said converted data to the downstream detection module via said output port (TxOut), said X-ray detector being **characterised in that**
each of the plurality of detection modules is configured to synchronously read X-ray image data detected by the detection module itself, based on an internal clock (φ) of the detection module itself, and transfer the read X-ray image data sequentially,
each of the plurality of detection modules is configured to receive the transferred X-ray image data, resynchronize the received X-ray image data by using the internal clock of the detection module itself, and transfer the received X-ray image data and the X-ray image data detected by the detection module, and
the last detection module of the plurality of detection modules is configured to transfer the X-ray image data to the data input port (5) of a control device (3).

2. The X-ray detector according to claim 1, wherein each of the plurality of detection modules transfers a transfer clock used in synchronization of the transfer and a transfer control signal controlling the transfer together with the X-ray image data, and resynchronizes the transfer clock by retiming the transfer clock to the internal clock.

3. The X-ray detector according to claim 1 or 2, wherein the detection module at an end on an output side of transfer of the X-ray image data transfers the X-ray image data to a control device controlling the plurality of detection modules.

4. The X-ray detector according to any of claims 1 to 3, further comprising: as a line connecting each of the plurality of detection modules,
a forward control line transmitting the transfer control signal in the forward direction relative to the transfer of the X-ray image data; and
a backward control line transmitting the transfer control signal in the backward direction relative to the transfer of the X-ray image data.

5. The X-ray detector according to any of claims 1 to 4, further comprising a serial communication line for connecting each of the plurality of detection modules and for transmitting the transfer control signal in both directions on an output side and an input side of the X-ray image data.

6. The X-ray detector according to any of claims 1 to 5, wherein each of the plurality of detection modules includes an input-side line buffer temporarily storing an input signal and an output-side line buffer temporarily storing an output signal.

7. The X-ray detector according to any of claims 1 to 6, wherein each of the plurality of detection modules performs the data transfer by using a differential signal.

8. The X-ray detector according to any of claims 1 to 7, wherein each of the plurality of detection modules detects X-rays through the use of a single-photon counting method.

9. The X-ray detector according to any of claims 1 to 8, wherein the detection module further includes a position verification port recognizing that the detection module is positioned at an end on an input side of transfer of the X-ray image data.

10. The X-ray detector according to any of claims 1 to 9, wherein the detection module is arranged so as to form a detection surface of X-rays on the circumference with respect to a sample.

## Patentansprüche

1. Röntgendetektor (50), umfassend:
eine Vielzahl von in Reihe geschalteten Detektionsmodulen (1), wobei jedes von der Vielzahl von Detektionsmodulen aufweist:
einen Eingangsport (TxIn), der konfiguriert ist, um Daten vom vorgeschalteten Detektionsmodul zu empfangen,
einen Ausgangsport (TxOut), der konfiguriert ist, um Daten an das nachgeschaltete Detektionsmodul zu senden,
einen Detektionsbereich (7), der konfiguriert ist, um Röntgenstrahlen zu detektieren und diese in Röntgenbilddaten umzuwandeln, und
einen Übertragungsbereich (6), der konfiguriert ist, um die über den Eingangsport (TxIn) empfangenen Daten und die umgewandelten Daten über den Ausgangsport (TxOut) an das nachgeschaltete Detektionsmodul zu übertragen, wobei der Röntgendetektor **dadurch gekennzeichnet ist, dass**
jedes von der Vielzahl von Detektionsmodulen konfiguriert ist, um vom Detektionsmodul selbst detektierte Röntgenbilddaten synchron zu lesen, basierend auf einer inneren Uhr (Φ) des Detektionsmoduls, und die gelesenen Röntgenbilddaten sequentiell zu übertragen,
jedes von der Vielzahl von Detektionsmodulen konfiguriert ist, um die übertragenen Röntgenbilddaten zu empfangen, die empfangenen Röntgenbilddaten unter Verwendung der inneren Uhr des Detektionsmoduls neu zu synchronisieren und die empfangenen Röntgenbilddaten und die vom Detektionsmodul detektierten Röntgenbilddaten zu übertragen, und
das letzte Detektionsmodul von der Vielzahl von Detektionsmodulen konfiguriert ist, um die Röntgenbilddaten an den Dateneingangsport (5) der Steuervorrichtung (3) zu übertragen.

2. Röntgendetektor nach Anspruch 1, wobei jedes von der Vielzahl von Detektionsmodulen eine Übertragungsuhr, die bei der Synchronisation der Übertragung verwendet wird, und ein Übertragungssteuersignal, das die Übertragung steuert, zusammen mit den Röntgenbilddaten überträgt und die Übertragungsuhr durch Neutaktung der Übertragungsuhr mit der inneren Uhr neu synchronisiert.

3. Röntgendetektor nach Anspruch 1 oder 2, wobei das Detektionsmodul an einem Ende an einer Ausgangsseite der Übertragung der Röntgenbilddaten die Röntgenbilddaten an eine Steuervorrichtung überträgt, die die Vielzahl von Detektionsmodulen steuert.

4. Röntgendetektor nach einem der Ansprüche 1 bis 3, weiter umfassend: als eine Leitung, die jedes von der Vielzahl von Detektionsmodulen verbindet,
eine Vorwärtssteuerleitung, die das Übertragungssteuersignal in einer Vorwärtsrichtung bezüglich der Übertragung der Röntgenbilddaten überträgt; und
eine Rückwärtssteuerleitung, die das Übertragungssteuersignal in der Rückwärtsrichtung bezüglich der Übertragung der Röntgenbilddaten überträgt.

5. Röntgendetektor nach einem der Ansprüche 1 bis 4, weiter umfassend eine serielle Kommunikationsleitung zum Verbinden jedes von der Vielzahl von Detektionsmodulen und zum Übertragen des Übertragungssteuersignals in beiden Richtungen an einer Ausgangsseite und einer Eingangsseite der Röntgenbilddaten.

6. Röntgendetektor nach einem der Ansprüche 1 bis 5, wobei jedes von der Vielzahl von Detektionsmodulen einen eingangsseitigen Leitungspuffer, der ein Eingangssignal temporär speichert, und einen ausgangsseitigen Leitungspuffer aufweist, der ein Ausgangssignal temporär speichert.

7. Röntgendetektor nach einem der Ansprüche 1 bis 6, wobei jedes von der Vielzahl von Detektionsmodulen die Datenübertragung unter Verwendung eines Differenzsignals durchführt.

8. Röntgendetektor nach einem der Ansprüche 1 bis 7, wobei jedes von der Vielzahl von Detektionsmodulen Röntgenstrahlen durch die Verwendung eines Einzelphotonenzählverfahrens detektiert.

9. Röntgendetektor nach einem der Ansprüche 1 bis 8, wobei das Detektionsmodul weiter einen Positionsverifizierungsport aufweist, der erkennt, dass das Detektionsmodul an einem Ende an einer Eingangsseite der Übertragung der Röntgenbilddaten positioniert ist.

10. Röntgendetektor nach einem der Ansprüche 1 bis 9, wobei das Detektionsmodul angeordnet ist, um eine Detektionsfläche von Röntgenstrahlen am Umfang in Bezug auf eine Probe zu bilden.

## Revendications

1. Détecteur de rayons X (50), comprenant :
une pluralité de modules de détection (1), connectés en série, chacun de la pluralité de modules de détection ayant
un port d'entrée (TxIn) configuré pour recevoir des données du module de détection amont,
un port de sortie (TxOut) configuré pour envoyer des données au module de détection aval,
une section de détection (7) configurée pour détecter les rayons X et les convertir en données d'image de rayons X, et
une section de transfert (6) configurée pour transférer lesdites données reçues via ledit port d'entrée (TxIn) et lesdites données converties au module de détection aval via ledit port de sortie (TxOut), ledit détecteur de rayons X étant **caractérisé en ce que**
chacun de la pluralité de modules de détection est configuré pour lire de façon synchrone des données d'image de rayons X détectées par le module de détection lui-même, sur la base d'une horloge interne (Φ) du module de détection lui-même, et transférer séquentiellement les données d'image de rayons X lues,
chacun de la pluralité de modules de détection est configuré pour recevoir les données d'image de rayons X transférées, resynchroniser les données d'image de rayons X reçues en utilisant l'horloge interne du module de détection lui-même, et transférer les données d'image de rayons X reçues et les données d'image de rayons X détectées par le module de détection, et
le dernier module de détection de la pluralité de modules de détection est configuré pour transférer les données d'image de rayons X au port d'entrée de données (5) d'un dispositif de commande (3).

2. Détecteur de rayons X selon la revendication 1, dans lequel chacun de la pluralité de modules de détection transfère une horloge de transfert utilisée dans la synchronisation du transfert et un signal de commande de transfert commandant le transfert et les données d'image de rayons X, et resynchronise l'horloge de transfert en resynchronisant l'horloge de transfert sur l'horloge interne.

3. Détecteur de rayons X selon la revendication 1 ou 2, dans lequel le module de détection à une extrémité d'un côté sortie de transfert des données d'image de rayons X transfère les données d'image de rayons X à un dispositif de commande commandant la pluralité de modules de détection.

4. Détecteur de rayons X selon l'une quelconque des revendications 1 à 3, comprenant en outre : en tant que ligne connectant chacun de la pluralité de modules de détection,
une ligne de commande avant transmettant le signal de commande de transfert dans la direction avant par rapport au transfert des données d'images de rayons X ; et
une ligne de commande arrière transmettant le signal de commande de transfert dans la direction arrière par rapport au transfert des données d'images de rayons X.

5. Détecteur de rayons X selon l'une quelconque des revendications 1 à 4, comprenant en outre une ligne de communication série pour connecter chacun de la pluralité de modules de détection et pour transmettre le signal de commande de transfert dans les deux directions d'un côté sortie et d'un côté entrée des données d'image de rayons X.

6. Détecteur de rayons X selon l'une quelconque des revendications 1 à 5, dans lequel chacun de la pluralité de modules de détection inclut une mémoire tampon de ligne côté entrée stockant temporairement un signal d'entrée et une mémoire tampon de ligne côté sortie stockant temporairement un signal de sortie.

7. Détecteur de rayons X selon l'une quelconque des revendications 1 à 6, dans lequel chacun de la pluralité de modules de détection exécute le transfert de données en utilisant un signal différentiel.

8. Détecteur de rayons X selon l'une quelconque des revendications 1 à 7, dans lequel chacun de la pluralité de modules de détection détecte des rayons X par l'utilisation d'un procédé de comptage de photons uniques.

9. Détecteur de rayons X selon l'une quelconque des revendications 1 à 8, dans lequel le module de détection inclut en outre un port de vérification de position reconnaissant que le module de détection est positionné à une extrémité d'un côté entrée du transfert des données d'image de rayons X.

10. Détecteur de rayons X selon l'une quelconque des revendications 1 à 9, dans lequel le module de détection est agencé de manière à former une surface de détection de rayons X sur la circonférence par rapport à un échantillon.
